(19) Europäisches Patentamt

European Patent Office

Office européen des brevets

(11) **EP 1 532 030 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(21) Anmeldenummer: **03790676.5**

(22) Anmeldetag: **05.08.2003**

(51) Int Cl.:
**B60T 8/00** (2006.01)

(86) Internationale Anmeldenummer:
**PCT/DE2003/002623**

(87) Internationale Veröffentlichungsnummer:
**WO 2004/020261 (11.03.2004 Gazette 2004/11)**

(54) **VERFAHREN UND VORRICHTUNG ZUR BREMSUNG ZWEIER RÄDER EINES FAHRZEUGS**

METHOD AND DEVICE FOR BRAKING TWO WHEELS OF A VEHICLE

PROCEDE ET DISPOSITIF DE FREINAGE DE DEUX ROUES D'UN VEHICULE

(84) Benannte Vertragsstaaten:
**DE IT**

(30) Priorität: **13.08.2002 DE 10237002**

(43) Veröffentlichungstag der Anmeldung:
**25.05.2005 Patentblatt 2005/21**

(73) Patentinhaber: **ROBERT BOSCH GMBH**
**70442 Stuttgart (DE)**

(72) Erfinder:
• **BREITENBACHER, Juergen**
**73650 Winterbach (DE)**
• **KLUG, Andreas**
**74199 Untergruppenbach (DE)**
• **STREHLE, Alfred**
**70736 Fellbach (DE)**
• **SHUNSAKU, Ono**
**236-0057 Kanagawaken (JP)**

(56) Entgegenhaltungen:
**DE-A- 10 011 269**    **DE-A- 10 058 976**
**DE-A- 19 712 889**    **DE-A- 19 956 553**

EP 1 532 030 B1

**Beschreibung**

Stand der Technik

Die Erfindung betrifft ein Verfahren und eine Vorrichtung zur Bremsung zweier Fahrzeugräder einer Achse.

Aus der DE 42 25 983 A1 ist ein Verfahren zur Bremsung von Fahrzeugrädern bekannt, bei dem zur Verringerung eines durch ein ABS erzeugten Giermoments der Bremsdruckaufbau an wenigstens einem Rad beeinflusst wird. Es wird der Bremsdruck an den Rädern einer Achse derart beeinflusst, dass die Differenz der Bremsdrücke einer Achse einen zulässigen Wert nicht überschreitet. Dieser maximal zulässige Wert wird von der Fahrzeuggeschwindigkeit und der Querbeschleunigung abhängig gemacht.

Die Merkmale der Oberbegriffe der unabhängigen Ansprüche sind der DE 42 25 983 A1 entnommen.

Vorteile der Erfindung

Die Erfindung betrifft ein Verfahren zur Bremsung zweier Räder eines Fahrzeugs, bei dem der Wert des Bremsdrucks im dem ersten Rad zugeordneten Radbremszylinder mit dem Wert des Bremsdrucks im dem zweiten Rad zugeordneten Radbremszylinder verknüpft ist.

Dabei ist die Verknüpfung über die an den jeweiligen Einlassventilen abfallenden hydraulischen Druckdifferenzen gegeben.

Eine vorteilhafte Ausgestaltung ist dadurch gekennzeichnet, dass

- der Spulenstrom durch das jeweilige Einlassventil ermittelt wird und
- daraus die am jeweiligen Einlassventil abfallenden Druckdifferenz ermittelt wird.

Eine vorteilhafte Ausgestaltung ist dadurch gekennzeichnet, dass mit der Kenntnis der am jeweiligen Einlassventil abfallenden Druckdifferenz auch der Spulenstrom durch das jeweilige Einlassventil bekannt ist. Damit wird eine besonders einfache und robuste Steuerung ermöglicht, da sich ein vorgegebener Strom wesentlich einfacher als eine vorgegebene Druckdifferenz einstellen lässt.

Eine vorteilhafte Ausgestaltung ist dadurch gekennzeichnet, dass

- aus der abfallenden Druckdifferenz am ersten der beiden Einlassventile die am zweiten der beiden Einlassventile abfallende gewünschte Druckdifferenz ermittelt wird,
- und daraus der zur Erzeugung der gewünschten Druckdifferenz am zweiten der beiden Einlassventile notwendige Spulenstrom ermittelt wird.

Wie bereits erwähnt ist eine Einstellung des für das zweite Einlassventil notwendigen Stromes auf einfache und robuste Weise möglich.

Eine vorteilhafte Ausgestaltung ist dadurch gekennzeichnet, dass

- der Spulenstrom durch das erste der beiden Einlassventile ermittelt wird und
- daraus die am ersten Einlassventil abfallende Druckdifferenz ermittelt wird.

Eine vorteilhafte Ausführungsform ist dadurch gekennzeichnet, dass der Spulenstrom aus einer das Einlassventil charakterisierenden Kennlinie entnommen bzw. ermittelt wird. Diese Kennlinie ist in einem Steuergerät in einfacher Art und Weise hinterlegbar.

Eine vorteilhafte Ausgestaltung ist dadurch gekennzeichnet, dass es sich bei der Kennlinie um eine den Zusammenhang zwischen der abfallenden Druckdifferenz und dem Spulenstrom charakterisierende Kennlinie handelt. Damit handelt es sich um eine Ventileigenschaft. Die Auswahl geeigneter Ventile kann dann vorteilhafterweise anhand der zugehörigen Kennlinie erfolgen.

Eine vorteilhafte Ausgestaltung ist dadurch gekennzeichnet, dass die Verknüpfung einen Maximalwert für die Differenz zwischen den an den jeweiligen Einlassventilen abfallenden Druckdifferenzen angibt. Durch die Vorgabe dieser maximalen Differenz als Nebenbedingung ist es möglich, ein übermäßig starkes Giermoment während eines ABS-Bremsvorganges zu vermeiden.

Eine weitere vorteilhafte Ausgestaltung ist dadurch gekennzeichnet, dass die Verknüpfung die Differenz zwischen den an den jeweiligen Einlassventilen abfallenden Druckdifferenzen angibt. Durch die Angabe der Differenz liegt bei bekanntem Druckabfall an einem Einlassventil der Druckabfall am anderen Einlassventil ebenfalls fest. Damit wird an diesem zweiten Einlassventil eine Steuerung anstelle einer Regelung ermöglicht. Eine Steuerung ist wesentlich unaufwendiger zu implementieren als eine Regelung.

Eine vorteilhafte Ausgestaltung ist dadurch gekennzeichnet, dass die Differenz zwischen den an den jeweiligen Einlassventilen abfallenden Druckdifferenzen abhängig vom vorliegenden Fahrzustand und/oder von der Zeit ist. Damit wird eine situationsabhängige Anpassung ermöglicht.

Eine vorteilhafte Ausführungsform ist dadurch gekennzeichnet, dass die beiden Räder zu derselben Achse gehören.

Die Vorrichtung zur Bremsung zweier Räder eines Fahrzeugs enthält

- dem jeweiligen Rad zugeordnete Radbremszylinder sowie
- dem jeweiligen Radbremszylinder zugeordnete Einlassventile.

Weiterhin sind Verknüpfungsmittel vorhanden, welche die an den jeweiligen Einlassventilen abfallenden hydraulischen Druckdifferenzen verknüpfen.

Eine vorteilhafte Ausgestaltung ist dadurch gekennzeichnet, dass die Verknüpfungsmittel so ausgestaltet sind, dass die Verknüpfung der Druckdifferenzen über eine Verknüpfung der Spulenströme durch die jeweiligen Einlassventile erfolgt.

Eine weitere vorteilhafte Ausgestaltung ist dadurch gekennzeichnet, dass es sich bei den Einlassventilen um Differenzdruckregelventile handelt.

Weitere vorteilhafte Ausgestaltungen der Erfindung sind den Unteransprüchen zu entnehmen. Die beschriebenen Ausführungsformen des Verfahrens eignen sich selbstverständlich auch als Ausführungsformen der Vorrichtung und umgekehrt.

Zeichnung

Ein Ausführungsbeispiel der Erfindung ist in den Zeichnungen 1 bis 8 dargestellt.

Fig. 1 zeigt eine Radbremse sowie ein Einlassventil in Form eines hydraulischen Schaltbildes.

Fig. 2 zeigt eine getaktete Ansteuerung des Einlassventils

Fig. 3 zeigt in allgemeiner Form die Ansteuerung eines Einlassventils.

Fig. 4 zeigt das Ventilverhalten und die Reaktion des zugehörigen Fahrzeugrades bei einer Ansteuerung des Ventils mit zu hohem und zu niedrigem Ansteuerstrom.

Fig. 5 zeigt das Ventilverhalten und die Reaktion des Fahrzeugrades bei einer speziellen Ansteuerung zur Vermeidung des Blockierens des betreffenden Rades.

Fig. 6 zeigt die an einem Rad des Fahrzeugs bei einem Bremsvorgang angreifenden Kräfte und Momente.

Fig. 7 zeigt den Ablauf des erfindungsgemäßen Verfahrens.

Fig. 8 zeigt den Aufbau der erfindungsgemäßen Vorrichtung.

Ausführungsbeispiele

Ein hydraulisches Bremssystem ist beispielsweise aus der DE 197 12 889 A1 (dies entspricht der US 6,273,525 B1) bekannt.

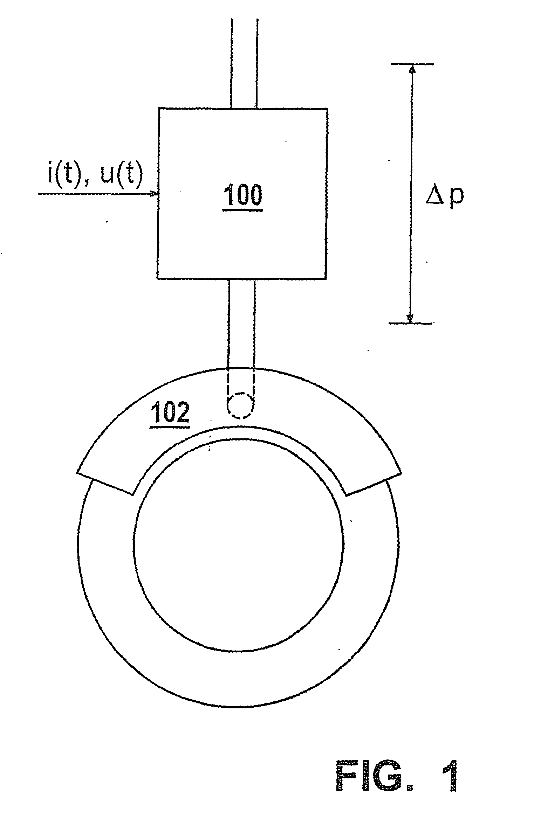

Einen Ausschnitt aus einem Hydraulikkreis zeigt Fig. 1 des vorliegenden Dokuments. Dabei kennzeichnet Block 100 ein Einlassventil, Block 102 kennzeichnet die Radbremse, $\Delta p$ kennzeichnet den entlang des Einlassventils abfallenden Druck. Dabei wird das Einlassventil über eine Spannung u(t) oder einen Strom i(t) angesteuert.

Beim Einlassventil handelt es sich bei der vorliegenden Erfindung um ein Druckdifferenzregelventil bzw. ein lineares Magnetventil (LMV). Dieses hat die Eigenschaft, dass der Spulenstrom durch das Einlassventil proportional zur Druckdifferenz $\Delta p$ ist, welche entlang des Einlassventils abfällt. Dabei hat das Einlassventil die beiden folgenden Grenzzustände:

- bei einem kleinen Spulenstrom ist es geöffnet und damit $\Delta p = 0$.
- Bei einem großen Spulenstrom ist es geschlossen und es findet kein Durchfluss von Bremsflüssigkeit bzw. des Bremsmediums statt.

Druckregelnde Einlassventile lassen sich durch zwei wesentliche Eigenschaften charakterisieren:

1. einen statischen Zusammenhang zwischen der Ventilbestromung und der eingeregelten Druckdifferenz (i-$\Delta$p-Kennlinie) und

2. ein dynamisches Einschwingverhalten. Dies lässt sich durch ein Verzögerungsglied erster Ordnung recht gut beschreiben, wobei die Zeitkonstante eine Funktion des angeschlossenen hydraulischen Volumens ist.

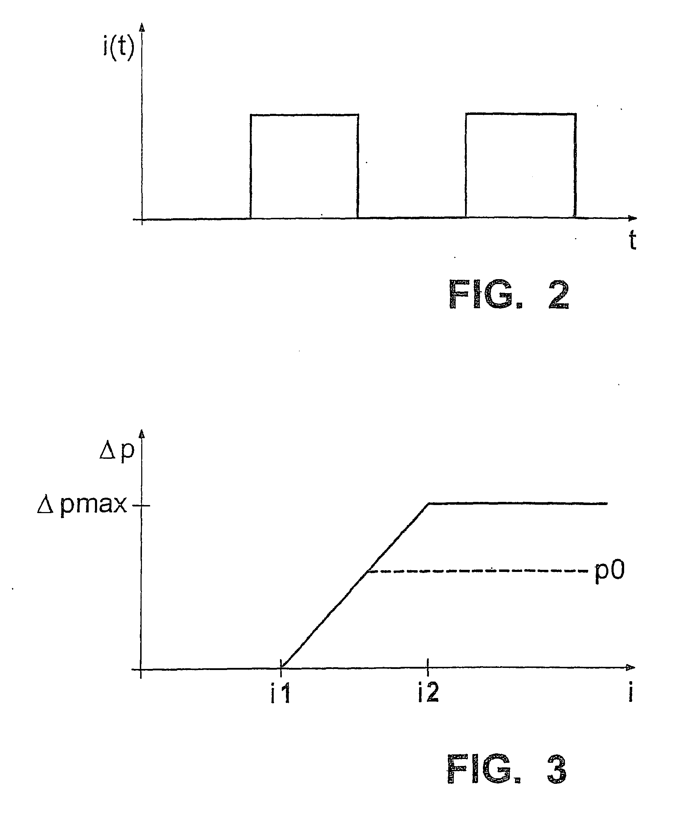

Eine getaktete Betriebsweise eines solchen Ventils ist in Fig. 2 dargestellt. Dabei ist in Abszissenrichtung die Zeit t und in Ordinatenrichtung der Strom i(t) dargestellt. Der Strom i(t) wechselt dabei zwischen einem kleinen und einem großen Wert, entsprechend wechselt das Einlassventil zwischen den Zuständen "offen" und "geschlossen" mit negativen Folgen wie Geräuschentwicklung und hoher mechanischer Ventilbelastung.

Die charakteristische i-$\Delta$p-Kennlinie eines Einlassventils ist in Fig. 3 dargestellt. Darin ist entlang der Abszisse der Strom i durch die Spule des Einlassventils und entlang der Ordinate die Druckdifferenz $\Delta$p, auf welche sich das Einlassventil einregelt, dargestellt. Bei kleinen Strömen 0 < i < i1 ist das Ventil offen und damit $\Delta$p = 0. Zwischen i1 und i2 wächst $\Delta$p näherungsweise linear an. Beim Strom i2 ist die durch das Einlassventil maximal regelbare Druckdifferenz $\Delta$p erreicht. Die Druckdifferenz $\Delta$p ist die Differenz zwischen dem Druck am Eingang des Einlassventils und dem Druck am Ausgang des Einlassventils.

Das Befüllen des Radbremszylinders mit dem Bremsmedium und damit die Erzeugung von Bremsdruck wird nun anhand von Fig. 3 erklärt.

- Zunächst sei das Einlassventil geschlossen und es liege der Druck p0 zwischen der Zuführung zum Einlassventil und dem Radbremszylinder an.
- Dabei fliesse beispielsweise ein Strom i > i2.
- Nun soll der Druck im Radbremszylinder erhöht werden. Dies geschieht durch Öffnen des Einlassventils.
- Dazu wird der Strom i ausgehend vom Wert i2 zeitlich rampenförmig verringert. In Fig. 3 bewegt sich der Zustand dann entlang der strichlierten Linie nach links.
- Es fällt solange die Druckdifferenz $\Delta$p entlang des Einlassventils ab, bis derjenige Stromwert erreicht ist, bei dem die strichlierte Linie die durchgezogen eingezeichnete Kennlinie des Einlassventils schneidet.
- Nun bewegt sich der Zustand des Einlassventils entlang der Kennlinie auf den Punkt $\Delta$p = 0 zu. Dabei muß dieser Punkt nicht zwangsläufig erreicht werden. Das bedeutet anschaulich, daß sowohl der Strom als auch die Druckdifferenz zeitlich abnehmen. Durch die hinreichend langsame Rücknahme des Stroms wird das Ventil dabei im statischen Gleichgewicht betrieben. Das bedeutet, dass sich das Ventil stets in einem statisch eingeschwungenen Zustand befindet und sich der Zustand des Ventils entlang der in Fig. 3 eingezeichneten Kennlinie bewegt.
- Dabei öffnet das Einlassventil und der Druck im Radbremszylinder wächst kontinuierlich an.

Dieser Öffnungsvorgang kann beispielsweise durch eine linear abfallende Stromrampe erreicht werden.

Die Bewegung des Zustandes des Ventils entlang der Kennlinie bedeutet, dass das Einlassventil während des Druckaufbaus im Radbremszylinders ausschließlich im statisch eingeschwungenen Zustand betrieben wird. Eine solche Betriebsweise ist in der Physik auch unter dem Stichwort "adiabatisch" bekannt: Der Öffnungsvorgang durchläuft eine Sequenz von statischen Zuständen.

Hierbei ist es unerheblich, ob die Ventilbestromung durch Stromvorgabe oder Spannungsvorgabe entweder kontinuierlich oder durch Puls/Pause-Ansteuerung erfolgt. Die Puls-Pause-Ansteuerung sollte dabei jedoch so hochfrequent sein, dass das Druckdifferenzregelventil den hochfrequenten Schaltvorgängen nicht folgen kann, sondern lediglich dem Mittelwert der Puls-Pause-Ansteuerung folgt. Hierbei wird die physikalische Eigenschaft ausgenutzt, dass sich der Spulenstrom nicht sprungartig verändern kann.

Die beschriebene Ansteuerung des Ventils hat neben dem verbesserten Schaltverhalten den zusätzlichen Vorteil, dass über die i-$\Delta$p-Kennlinie zusätzlich bei bekanntem Strom auch die Druckdifferenz $\Delta$p bekannt ist. Diese Zusatzinformation $\Delta$p steht damit auch für ABS-, ESP- oder ASR-Regelung zur Verfügung.

(ABS = Antiblockiersystem, ASR = Antriebsschlupfregelung, ESP = "Electronic Stability Program")

Bei der Verwendung der vorstehend beschriebenen Regelung über die i-$\Delta$p-Kennlinie stellt sich neben dem Zeitpunkt des Druckaufbaus noch die Frage, mit welchem Strom das Ventil zu Beginn des Druckaufbaus angesteuert wird. Dazu gibt es zwei Möglichkeiten:

1. In vielen Fahrdynamikregelungssystemen (z.B. ESP) ist der Vordruck im Bremskreis über die im Fahrzeug vorhandene Sensorik bekannt. Mit einem Raddruckmodell kann der aktuelle Bremsdruck im Radbremszylinder berechnet werden. Aus der Kenntnis des Vordrucks und des aktuellen Bremsdrucks im Radbremszylinder kann die aktuelle (am Einlassventil abfallende) Druckdifferenz berechnet werden. Daraus kann über die i-$\Delta$p-Kennlinie der notwendige Öffnungsstrom bestimmt werden.

2. In vielen Systemen (z.B. bei vielen ABS-Systemen) ist der Vordruck im Bremskreis nicht bekannt. Die für diesen Fall vorgesehene Abhilfe über die Ausnutzung der druckdifferenzregelnden Eigenschaften der Einlassventile (auch ohne Kenntnis des Vordrucks) wird im folgenden beschrieben.

Ein Druckaufbau findet bei den betrachteten ESP- und ABS-Systemen immer aus einer Phase des Druckhaltens heraus statt, d.h. einer Druckaufbauphase (im Radbremszylinder) geht stets eine Phase mit konstantem Druck im Radbremszylinder voraus. In der Druckhaltephase ist die Ventilbestromung unerheblich, solange sie nur groß genug ist, um das Einlassventil zu sperren. Zum unmittelbaren Beginn des Druckaufbaus muss ein Ventilstrom eingestellt werden, der der aktuell anliegenden Druckdifferenz entspricht. Ist dieser Stromwert falsch, dann ergeben sich die beiden folgenden Fälle:

Fall 1:

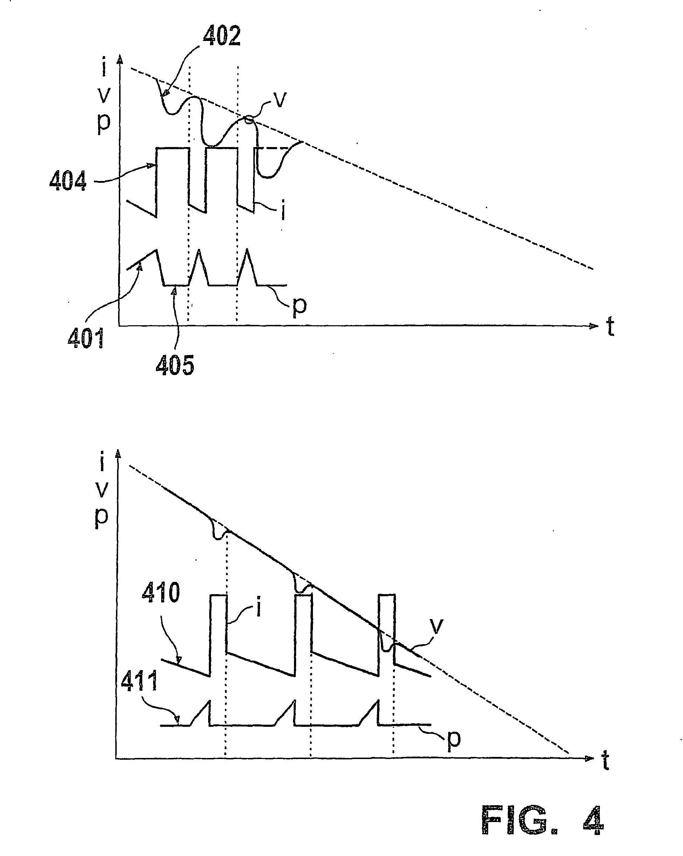

Ist der Strom zu klein (d.h. die am Einlassventil abfallende Druckdifferenz sinkt sehr schnell ab), dann findet ein Druckaufbau mit ungewollt großem Aufbaugradienten statt. Dieser führt zu einer unruhigen Regelung, in der Folge auch zu einem großen Radschlupf und zu einem schlecht lenkbaren Fahrzeug. Dieser Sachverhalt ist der oberen Abbildung von Fig. 4 dargestellt. Dabei ist in Abszissenrichtung die Zeit t aufgetragen, in Ordinatenrichtung sind der Ventilstrom i, die Radumfangsgeschwindigkeit v sowie der Druck p im entsprechenden Radbremszylinder aufgetragen. Sofort nach dem Einschalten des Stromes findet, wie bei Punkt 401 ersichtlich, ein rascher Druckaufbau statt. Dies führt zu einem entsprechend starken Einbruch der Radumfangsgeschwindigkeit (402) und als Folge davon zu einem Ansprechen der ABS-Regelung. Die ABS-Regelung erhöht den Strom durch das Einlassventil sprungartig (404). Dies führt zu einem Schließen des Einlassventils. Damit wächst der Druck im Radbremszylinder nicht mehr weiter an. Der (sehr langsame) Druckabbau im Radbremszylinder erfolgt durch das Öffnen des entsprechenden Auslassventils.

Fall 2:

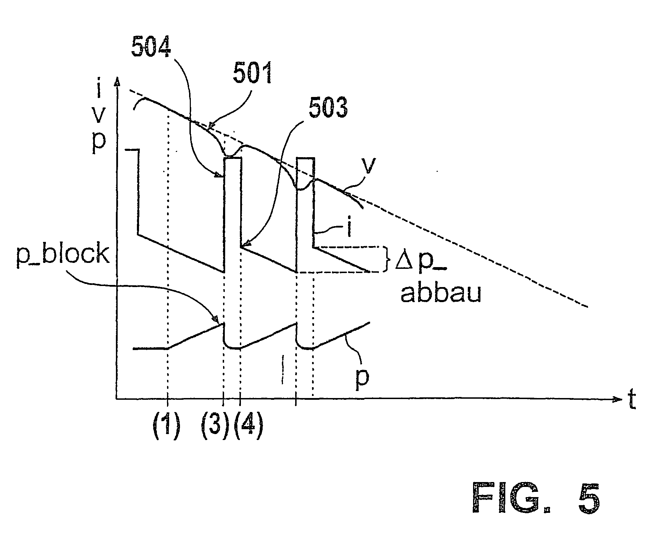

Ist der Strom zu groß, dann wird der Druckaufbau solange verzögert, bis sich Ventilstrom (und damit die maximal sperrbare Druckdifferenz) und Druckdifferenz im Gleichgewicht befinden. In dieser Zeit ist die Bremskraft zu klein und das Fahrzeug verzögert nicht optimal. Dies ist graphisch in der unteren Abbildung von Fig. 4 dargestellt, deren Achsen und eingezeichnete Kurven analog zur oberen Abbildung beschriftet sind. Der Strom i ist zu groß (Pfeil 410), deshalb wird die Druckdifferenz $\Delta p$ zu lange gehalten und nicht sofort abgebaut. Die Bremsdruckerhöhung im Radbremszylinder erfolgt daher erst sehr spät (siehe Pfeil 411).
Eine mögliche alternative Ansteuerung des Einlassventils ist in Fig. 5 dargestellt. Die Achsen sind analog zu Fig. 4 beschriftet. Das Ansteuerungsverfahren läuft dabei in den im folgenden beschriebenen Schritten ab.

Schritt 1:

Aus einer Druckhaltephase heraus wird der Stromwert ausgehend von einem zunächst zu hohen Wert rampenförmig verringert. Zum auf der Zeitachse mit (1) gekennzeichneten Zeitpunkt wird das Kräftegleichgewicht am Ventil erreicht, hier beginnt der Druckaufbau. Dies ist am Anwachsen der Drucks p im Radbremszylinder in der untersten der eingezeichneten Kurven ersichtlich.
Es soll hier betont werden, dass in einem System ohne Raddrucksensorik dieser Zeitpunkt nicht beobachtet werden kann.

Schritt 2:

Der Strom wird weiter abgesenkt mit einem Gradienten, welcher (vermittelt über die i-$\Delta p$-Kennlinie) den Druckaufbauerfordernissen des ABS-Reglers nachkommt, jedoch so langsam, dass sich das Einlassventil (wie vorstehend beschrieben) immer im statisch eingeschwungenen Zustand befindet. Diese Phase findet entlang der Zeitachse zwischen den eingezeichneten Zeitpunkten (1) und (3) statt.

Schritt 3:

Die Absenkung des Stromes führt (wie erwähnt) zu einem Anstieg des Drucks im Radbremszylinder (siehe Anwachsen von p in Fig. 5) und zu einer wachsenden Instabilität des Rades. Dies drückt sich in der raschen Abnahme der Radumfangsgeschwindigkeit aus, wie es in der mit v gekennzeichneten Kurve in Fig. 5 dargestellt ist. Damit entfernt sich die Kurve der Radumfangsgeschwindigkeit (v) immer mehr von der (strichliert eingezeichneten) Kurve der Fahrzeuglängsgeschwindigkeit (das ist die strichliert eingezeichnete Gerade), wie es beispielsweise in Punkt 501 sichtbar ist. Die Radumfangsgeschwindigkeit v wird zunehmend kleiner gegenüber der Fahrzeuglängsgeschwindigkeit, das bedeutet anschaulich, dass zunehmender Bremsschlupf des Rades vorliegt.

Der Punkt maximaler Längskraft ist zum Zeitpunkt (3) erreicht, der Radbremszylinder ist mit dem Blockierdruck p_block beaufschlagt. Am Einlassventil fällt zugleich die Druckdifferenz $\Delta$p_instab ab. Der Wert des Blockierdrucks p_block ist nicht bekannt, jedoch gilt zum Zeitpunkt (3) für die entlang des Einlassventils abfallende Druckdifferenz $\Delta$p_instab die Beziehung

$$\Delta p\_instab = p\_hz - p\_block \quad .$$

p_hz ist dabei der Druck im Hauptbremszylinder. Der zur Druckdifferenz $\Delta$p_instab gehörende Strom ist bekannt und damit über die i-$\Delta$p-Kennlinie die Druckdifferenz $\Delta$p_instab.

Schritt 4:

Im folgenden wird wegen der Instabilität der Räder ein Druckabbau durchgeführt. Dieser Druckabbau dauert so lange, bis die beobachtete Raddynamik zeigt, dass das Rad wieder stabil wird, d.h. eine Schlupfschwelle unterschreitet. Der Druckabbau erfolgt dadurch, dass das Einlassventil geschlossen wird (über einen großen Ventilstrom, erreicht durch den schnellen Stromanstieg 504 in Fig. 5) und das Auslassventil geöffnet wird. Anschließend erfolgt eine Druckhaltephase zwischen den Zeitpunkten (3) und (4) (Einlassventil und Auslassventil geschlossen), bis der gewünschte Zeitpunkt für einen erneuten Druckaufbau erreicht ist. Dies ist der Zeitpunkt (4) in Fig. 5. Zu diesem Zeitpunkt liegt wieder ein stabiles Radverhalten vor.

Schritt 5:

Für den erneuten Druckaufbau muß zuerst der Startwert des Stromes (503 in Fig. 5) ermittelt werden. Bei der Ermittlung dieses Startwertes werden die folgenden Annahmen gemacht:

- Der Reibwert der Straße und damit der Blockierdruck war innerhalb des letzten Regelungszyklus näherungsweise konstant
- Der Vordruck war innerhalb des letzten Regelungszyklus näherungsweise konstant.
- Der Abbau der am Einlassventils abfallenden Druckdifferenz um den Betrag $\Delta$p_abbau, welcher zur Stabilisierung des Rades notwendig ist, ist reibwertunabhängig immer näherungsweise konstant. Der Wert $\Delta$p_abbau kennzeichnet (wie in Fig. 5 eingezeichnet) die Druckdifferenz zwischen dem Punkt, an dem der statische Betrieb des Einlassventils einsetzt und dem Punkt, an dem der statische Betrieb des Einlassventils endet. In Fig. 5 ist die Größe $\Delta$p_abbau der Stromkurve i zugeordnet. Dies erklärt sich dadurch, dass beim statischen Betrieb des Einlassventils ein linearer Zusammenhang zwischen dem Strom i und der am Ventil abfallenden Druckdifferenz $\Delta$p besteht.

Damit lässt sich die am Einlassventil abfallende Druckdifferenz beim Beginn des Druckaufbaus anhand der Gleichung

$$\Delta p\_start = \Delta p\_instab + \Delta p\_abbau$$

ermitteln. Diese Formel wird anschaulich durch die Vorstellung verständlich, dass

- $\Delta$p_instab der bei eintretender Instabilität am Ventil abfallende Druck ist und
- $\Delta$p_abbau diejenige Druckdifferenz ist, um welche der am Anfang des Regelungszyklus am Ventil abfallende Druck infolge des Üffnungsvorganges des Ventils reduziert wurde.

Der Startwert des Stromes beim Druckaufbau ergibt sich wieder aus der i-$\Delta$p-Kennlinie. Damit wird es durch das beschriebene Verfahren ermöglicht, bei Beginn des Druckaufbaus im Radbremszylinder mit dem Strom recht genau auf denjenigen Wert zu springen, dessen darauf folgende Verringerung unmittelbar zu einer Verringerung der am Ventil abfallenden Druckdifferenz führt.

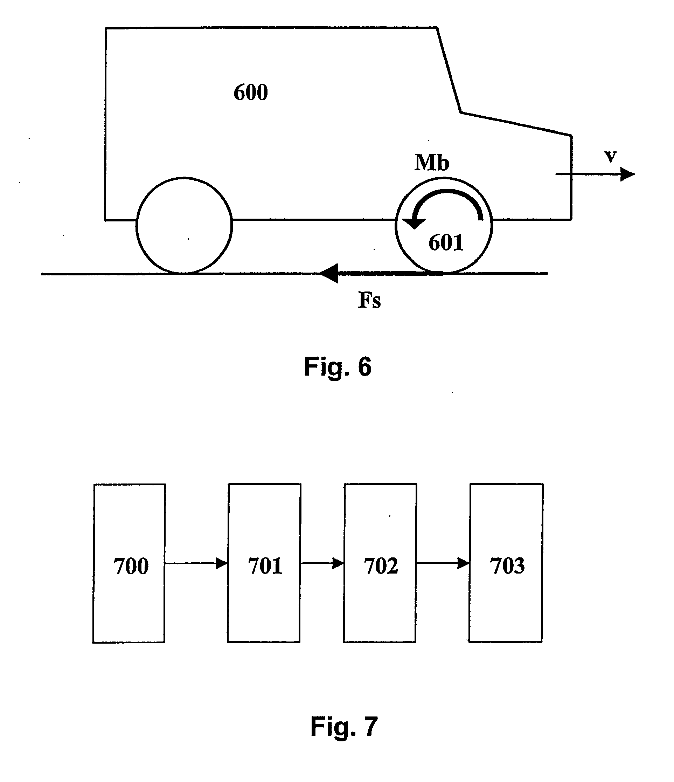

In Fig. 6 ist ein Fahrzeug 600 dargestellt, welches sich mit der Geschwindigkeit v nach rechts bewegt. Am Fahrzeug werde ein ausgewähltes Rad 601 betrachtet. Auf dieses Rad wirke über die Fahrzeugbremse das Bremsmoment Mb. Beim im Rad 602 eingezeichneten halbkreisförmigen Pfeil handelt es sich um die Wirkrichtung des Bremsmoments Mb.

Die Konsequenzen kann man sich anhand des folgenden Gedankenganges klarmachen:

- Neben dem Bremsmoment Mb wirkt zusätzlich noch die von der Straße aufgebrachte Kraft Fs auf das Rad.
- Das Bremsmoment Mb wirkt verzögernd auf das Rad, die Kraft Fs wirkt jedoch dieser Verzögerung entgegen.
- Die Kraft Fs kann einen Grenzwert, welcher vom Kontakt Reifen-Straßenoberfläche abhängt, nicht überschreiten. Wird dieser Wert überschritten, dann geht die Reibung sofort von Haftreibung in Gleitreibung über: Das Bremsmoment kann nicht mehr von der Kraft Fs kompensiert werden. Die Folge ist ein Blockieren des Rades.

Diese hier beschriebenen physikalischen Grundlagen werden nun auf den Fall eines Fahrzeugs angewandt, welches sich auf einer Fahrbahn mit links und rechts sehr unterschiedlichen Reibungskoeffizienten bewegt ($\mu$-Split) und stark abgebremst wird. Das im Fahrzeug vorhandenen ABS-System kann nun beispielsweise versuchen, die Bremskraft an beiden Rädern auf den maximal möglichen Wert einzustellen,

- welcher auf der Fahrzeugseite mit niedrigem Reibwert gering ist und
- welcher auf der Fahrzeugseite mit hohem Reibwert groß isst.

Als Folge der ungleichen Bremskräfte entsteht ein resultierendes Giermoment um die Hochachse des Fahrzeugs. Dieses Giermoment erzeugt eine Drehbewegung des Fahrzeugs in Richtung des höheren Reibwerts, welche der Fahrer durch Lenkbewegungen ausgleichen muss. Stabilitätsfördernd wirkt hier ein Absenken des Bremsdrucks auf der Seite des höheren Reibwertes. Hier sollte ein Druck eingestellt werden, welcher in seiner Größe zwischen dem Druck auf der Seite mit dem kleineren Reibwert (dann tritt kein Giermoment mehr auf, es liegt jedoch nur ein schwacher Bremsvorgang vor) und dem maximal möglichen Druck auf der Seite mit dem hohen Reibwert (dann wird mit maximaler Intensität abgebremst, es tritt jedoch ein starkes Giermoment auf) liegt.

Die Grundidee der Erfindung besteht darin, dass an einem Rad des Fahrzeugs der Bremsdruck beispielsweise gemäß dem beschriebenen Regelungsverfahren eingestellt wird. Bei diesem Verfahren ist zu jeder Zeit der elektrische Strom durch die Spule des Einlassventils bekannt.

Dieses Rad wird im folgenden als "geregeltes Rad" bezeichnet, das andere Rad an dieser Achse wird im folgenden als "gesteuertes Rad" bezeichnet.

Das Einlassventil des geregelten Rades fließe der Strom i_regel, am zugehörigen Einlassventil falle die Druckdifferenz $\Delta$p_regel ab. Ausgehend von der Druckdifferenz $\Delta$p_regel wird die am Einlassventil eines anderen Rades (d.h. des gesteuerten Rades) abfallende Druckdifferenz $\Delta$p_steuer gesteuert. Beim anderen Rad kann es sich um ein beliebiges Rad, aber auch um das andere Rad auf derselben Achse wie das geregelte Rad handeln.

Dies kann beispielsweise anhand der Vorschrift

$$\Delta p\_steuer = \Delta p\_regel - \mathrm{pdiff}$$

erfolgen. Damit liegt der Wert von $\Delta$p_steuer fest und anhand des Stromes durch das zugehörige Einlassventil kann diese gewünschte Druckdifferenz eingestellt (d.h. gesteuert) werden.

Damit ergibt sich der folgende Ablauf des Verfahrens:

1. Der Strom i_regel durch das Einlassventil des geregelten Rades ist bekannt.
2. Über die i-$\Delta$p-Kennlinie ist die am Einlassventil des geregelten Rades abfallende Druckdifferenz $\Delta$p_regel bekannt.
3. Anhand beispielsweise einer Vorschrift $\Delta$p_steuer = $\Delta$p_regel - pdiff ist die am Einlassventil des gesteuerten Rades abfallende Druckdifferenz $\Delta$p_steuer bekannt.
4. Über die i-$\Delta$p-Kennlinie ist der benötigte Strom i_steuer durch das Einlassventil des gesteuerten Rades bekannt.

Die i-$\Delta$p-Kennlinie kann bei beiden betrachteten Einlassventilen unterschiedlich oder identisch sein.

Der Wert von pdiff kann dabei beispielsweise zeitabhängig und/oder fahrzustandsabhängig gewählt werden.

Beispielsweise ist es möglich, mit einem Wert pdiff = 0 bei Regelbeginn zu starten und dann pdiff gemäß einer linearen Funktion zeitlich zu erhöhen.

In einer weiteren Ausführungsform ist vorgesehen, zwei Räder (beispielsweise die beiden Räder derselben Achse) bzgl. der am Einlassventil abfallenden Druckdifferenz individuell zu regeln. Als Folge der ABS-Regelung wird sich an jedem Rad die infolge des Kontaktes Reifen-Fahrbahn maximale Bremskraft einregeln. Insbesondere bei Vorliegen einer $\mu$-Split-Fahrbahn sind diese Bremskräfte sehr unterschiedlich und es entsteht damit

- zwar der kürzeste Bremsweg,

- jedoch auch ein unerwünschtes Giermoment.

Deshalb ist es hier sinnvoll eine Beziehung

$$\Delta p\_steuer = \Delta p\_regel - pdiffmax$$

als Nebenbedingung für die Regelung der beiden Räder zu verwenden. Dabei ist $\Delta p\_steuer$ die am Rad mit dem niedrigeren Reibwert abfallende Druckdifferenz. Am Rad mit dem höheren Reibwert findet eine eigenständige Regelung mit der Nebenbedingung statt, dass der am dortigen Einlassventil abfallende Bremsdruck $\Delta p\_regel$ den Wert $\Delta p\_regel\_max = \Delta p\_steuer + pdiffmax$ nicht überschreiten darf. Damit wird sichergestellt, dass am Rad mit dem höheren Reibwert auch eine höhere Bremskraft abgesetzt wird, über die Nebenbedingung wird jedoch eine zu starke Bremskraftdifferenz (und damit ein zu starkes Giermoment) verhindert.

Diese Lösung bietet einen sinnvollen Kompromiss zwischen dem Erreichen des kürzestmöglichen Bremswegs und dem Vermeiden einer Gierbewegung.

Der Ablauf des erfindungsgemäßen Verfahrens ist in Fig. 7 dargestellt.

Beim Start des Verfahrens in Block 700 ist der Strom i_regel durch das geregelte Einlassventil vorgegeben. Daraus wird anschließend in Block 701 der zugehörige Druckabfall $\Delta p\_regel$ anhand der Ventilkennlinie ermittelt. Anschließend wird in Block 702 der Druckabfall $\Delta p\_steuer$ am gesteuerten Einlassventil ermittelt. Anhand der Kennlinie des gesteuerten Einlassventils ist damit anschließend in Block 703 auch der Spulenstrom durch das gesteuerte Einlassventil bekannt.

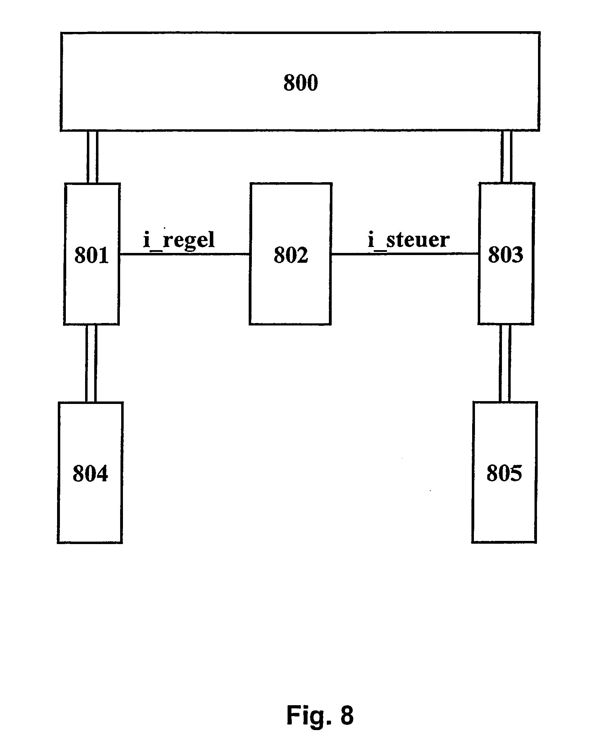

Der Aufbau der erfindungsgemäßen Vorrichtung ist in Fig. 8 dargestellt. Dabei kennzeichnet Block 802 die Verknüpfungsmittel, welche beispielsweise als ABS-Steuergerät ausgebildet sind. Die Verknüpfungsmittel 802 senden elektrische Ströme i_regel und i_steuer an die Einlassventile 801 und 802. Bei den doppelt gezogenen Leitungen (‖) handelt es sich um hydraulische Leitungen. Über solche Leitungen

- ist das Einlassventil 801 mit dem Radbremszylinder 804 und dem Hauptbremszylinder 800 verbunden und
- ist das Einlassventil 803 mit dem Radbremszylinder 805 und dem Hauptbremszylinder 800 verbunden.

Dadurch wird über die elektrischen Ströme eine Kontrolle der am jeweiligen Einlassventil abfallenden hydraulischen Druckdifferenz ermöglicht.

Selbstverständlich erstreckt sich die Erfindung auf die Bremsung von drei und mehr Rädern eines Fahrzeugs. Die beschriebene Bremsung eines geregelten und eines gesteuerten Rades lässt sich beispielsweise auch auf drei Räder ausdehnen, indem ein geregeltes Rad und zwei verschiedene (davon abhängige) gesteuerte Räder betrachtet werden.

**Patentansprüche**

1. Verfahren zur Bremsung zweier Räder eines Fahrzeugs, bei dem der Wert des Bremsdrucks im dem ersten Rad zugeordneten Radbremszylinder (804) mit dem Wert des Bremsdrucks im dem zweiten Rad zugeordneten Radbremszylinder (805) verknüpft ist,
**dadurch gekennzeichnet,**
**dass** die Verknüpfung über die an den jeweiligen Einlassventilen (801, 803) abfallenden hydraulischen Druckdifferenzen ($\Delta p\_regel$, $\Delta p\_steuer$) gegeben ist.

2. Verfahren nach Anspruch 1, **dadurch gekennzeichnet, dass**

   - aus der abfallenden Druckdifferenz ($\Delta p\_regel$) am ersten der beiden Einlassventile (801) die am zweiten der beiden Einlassventile (803) abfallende gewünschte Druckdifferenz ($\Delta p\_steuer$) ermittelt wird,
   - und daraus der zur Erzeugung der Druckdifferenz ($\Delta p\_steuer$) am zweiten der beiden Einlassventile (803) notwendige Spulenstrom (i_steuer) ermittelt wird.

3. Verfahren nach Anspruch 2, **dadurch gekennzeichnet, dass**

   - der Spulenstrom (i_regel) durch das erste der beiden Einlassventile (801) ermittelt wird und
   - daraus die am ersten Einlassventil (801) abfallende Druckdifferenz ($\Delta p\_regel$) ermittelt wird.

4. Verfahren nach Anspruch 3, **dadurch gekennzeichnet, dass** die Ermittlung der am am ersten Einlassventil (801) abfallenden Druckdifferenz ($\Delta$p_regel) aus dem Spulenstrom (i_regel) durch Auswertung einer Kennlinie erfolgt.

5. Verfahren nach Anspruch 2, **dadurch gekennzeichnet, dass** der Spulenstrom (i_steuer) aus einer das zweite Einlassventil charakterisierenden Kennlinie ermittelt wird.

6. Verfahren nach Anspruch 5, **dadurch gekennzeichnet, dass** es sich bei der Kennlinie um eine den Zusammenhang zwischen der abfallenden Druckdifferenz ($\Delta$p_steuer) und dem Spulenstrom (i_steuer) charakterisierende Kennlinie handelt.

7. Verfahren nach Anspruch 1, **dadurch gekennzeichnet, dass** die Verknüpfung einen Maximalwert (pdiffmax) für die Differenz zwischen den an den jeweiligen Einlassventilen abfallenden Druckdifferenzen ($\Delta$p_regel, $\Delta$p_steuer) angibt

8. Verfahren nach Anspruch 1, **dadurch gekennzeichnet, dass** die Verknüpfung die Differenz (pdiff) zwischen den an den jeweiligen Einlassventilen abfallenden Druckdifferenzen ($\Delta$p_regel, $\Delta$p_steuer) angibt.

9. Verfahren nach Anspruch 8, **dadurch gekennzeichnet, dass** die Differenz (pdiff) zwischen den an den jeweiligen Einlassventilen abfallenden Druckdifferenzen ($\Delta$p_regel, $\Delta$p_steuer) abhängig vom vorliegenden Fahrzustand und/ oder von der Zeit ist.

10. Verfahren nach Anspruch 1, **dadurch gekennzeichnet, dass** die beiden Räder zu derselben Achse gehören.

11. Vorrichtung zur Bremsung zweier Räder eines Fahrzeugs,

   - welche dem jeweiligen Rad zugeordnete Radbremszylinder enthält,
   - welche dem jeweiligen Radbremszylinder zugeordnete Einlassventile enthält,

   **dadurch gekennzeichnet,**
   **dass** Verknüpfungsmittel vorhanden sind, welche die an den jeweiligen Einlassventilen abfallenden hydraulischen Druckdifferenzen ($\Delta$p_regel, $\Delta$p_steuer) verknüpfen.

12. Vorrichtung nach Anspruch 11, **dadurch gekennzeichnet, dass** die Verknüpfungsmittel so ausgestaltet sind, dass die Verknüpfung der Druckdifferenzen ($\Delta$p_regel, $\Delta$p_steuer) über eine Verknüpfung der Spulenströme durch die jeweiligen Einlassventile erfolgt.

13. Vorrichtung nach Anspruch 11, **dadurch gekennzeichnet, dass** es sich bei den Einlassventilen um Differenzdruckregelventile handelt.

## Claims

1. Method for braking two wheels of a vehicle, in which the value of the brake pressure in the wheel brake cylinder (804) which is associated with the first wheel is logically combined with the value of the brake pressure in the wheel brake cylinder (805) which is associated with the second wheel,
   **characterized**
   **in that** the logical combination is by means of the hydraulic pressure differences ($\Delta$p_closedloop, $\Delta$p_openloop) across the respective inlet valves (801, 803).

2. Method according to Claim 1, **characterized in that**

   - the desired pressure difference ($\Delta$p_openloop) across the second of the two inlet valves (803) is determined from the pressure difference ($\Delta$p_closedloop) across the first of the two inlet valves (801),
   - and from this, the coil current (i_openloop) required for generating the pressure difference ($\Delta$p_openloop) at the second of the two inlet valves (803) is determined.

3. Method according to Claim 2, **characterized in that**

- the coil current (i_closedloop) through the first of the two inlet valves (801) is determined and
- from this, the pressure difference (Δp_closedloop) across the first inlet valve (801) is determined.

4. Method according to Claim 3, **characterized in that** the pressure difference (Δp_closedloop) across the first inlet valve (801) is determined from the coil current (i_closedloop) by evaluating a characteristic curve.

5. Method according to Claim 2, **characterized in that** the coil current (i_openloop) is determined from a characteristic curve which characterizes the second inlet valve.

6. Method according to Claim 5, **characterized in that** the characteristic curve is one which characterizes a relationship between the pressure difference (Δp_openloop) and the coil current (i_openloop).

7. Method according to Claim 1, **characterized in that** the logical combination specifies a maximum value (pdiffmax) for the difference between the pressure differences (Δp_closedloop, Δp_openloop) across the respective inlet valves.

8. Method according to Claim 1, **characterized in that** the logical combination specifies the difference (pdiff) between the pressure differences (Δp_closedloop, Δp_openloop) across the respective inlet valves.

9. Method according to Claim 8, **characterized in that** the difference (pdiff) between the pressure differences (Δp_closedloop, Δp_openloop) across the respective inlet valves is dependent on the present driving state and/or on time.

10. Method according to Claim 1, **characterized in that** the two wheels belong to the same axle.

11. Device for braking two wheels of a vehicle,

- which comprises wheel brake cylinders associated with the respective wheel,
- which comprises inlet valves associated with the respective wheel brake cylinder,

**characterized**
**in that** logic operation means are present which logically combine the hydraulic pressure differences (Δp_closedloop, Δp_openloop) across the respective inlet valves.

12. Device according to Claim 11, **characterized in that** the logic operation means are configured in such a way that the pressure differences (Δp_closedloop, Δp_openloop) are logically combined by logically combining the coil currents through the respective inlet valves.

13. Device according to Claim 11, **characterized in that** the inlet valves are differential-pressure regulating valves.

**Revendications**

1. Procédé de freinage de deux roues d'un véhicule, selon lequel on combine la valeur de la pression de freinage dans le cylindre de frein de roue (804) associé à la première roue, à la valeur de la pression de freinage dans le cylindre de frein de roue (805) associé à la deuxième roue,
**caractérisé en ce que**
la combinaison est fournie par la différence de pression hydraulique (Δp_régl, Δp_comm) apparaissant aux soupapes d'admission respectives (801, 803).

2. Procédé selon la revendication 1,
**caractérisé en ce qu'**
à partir de la différence de pression (Δp_régl) apparaissant à la première des deux soupapes d'admission (801) on détermine la différence de pression désirée (Δp_comm) apparaissant à la deuxième des deux soupapes d'admission (803), et on détermine à partir de celle-ci le courant de bobine (i_comm) nécessaire pour créer la différence de pression (Δp_comm) à la deuxième des deux soupapes d'admission (803).

3. Procédé selon la revendication 2,
**caractérisé en ce qu'**
on détermine le courant de bobine (i_régl) à travers la première des deux soupapes d'admission (801) et on détermine à partir de celui-ci la différence de pression ($\Delta$p_régl) apparaissant à la première soupape d'admission (801).

4. Procédé selon la revendication 1,
   **caractérisé en ce qu'**
   la détermination de la différence de pression ($\Delta$p_régl) apparaissant à la première soupape d'admission (801) est effectuée par l'exploitation d'une courbe caractéristique à partir du courant de bobine (i_régl).

5. Procédé selon la revendication 2,
   **caractérisé en ce qu'**
   on détermine le courant de bobine (i_comm) à partir d'une courbe caractéristique de la deuxième soupape d'admission.

6. Procédé selon la revendication 5,
   **caractérisé en ce que**
   la courbe caractéristique est une courbe caractérisant la relation entre la différence de pression apparaissant ($\Delta$p_comm) et le courant de bobine (i_comm).

7. Procédé selon la revendication 1,
   **caractérisé en ce que**
   la combinaison indique une valeur maximale (pdiffmax) pour la différence entre les différences de pression ($\Delta$p_régl, $\Delta$p_comm) apparaissant aux soupapes d'admission respectives.

8. Procédé selon la revendication 1,
   **caractérisé en ce que**
   la combinaison indique la différence (pdiff) entre les différences de pression ($\Delta$p_régl, $\Delta$p_comm) apparaissant aux soupapes d'admission respectives.

9. Procédé selon la revendication 8,
   **caractérisé en ce que**
   la différence (pdiff) entre les différences de pression ($\delta$p_régl, $\Delta$p_comm) apparaissant aux soupapes d'admission respectives dépend de l'état de marche actuel et/ou du temps.

10. Procédé selon la revendication 1,
    **caractérisé en ce que**
    les deux roues appartiennent au même essieu.

11. Dispositif de freinage de deux roues d'un véhicule, qui comprend des cylindres de frein de roue associés aux roues respectives, et des soupapes d'admission associées aux cylindres de frein de roue respectifs,
    **caractérisé en ce qu'**
    il comporte des moyens de combinaison reliant les différences de pression hydrauliques ($\Delta$p_régl, $\Delta$p_comm) apparaissant aux soupapes d'admission respectives.

12. Dispositif selon la revendication 11,
    **caractérisé en ce que**
    les moyens de combinaison sont conçus pour combiner les différences de pression ($\Delta$p_régl, $\Delta$p_comm) par une combinaison des courants de bobine traversant les soupapes d'admission respectives.

13. Dispositif selon la revendication 11,
    **caractérisé en ce que**
    les soupapes d'admission sont des soupapes de régulation de pression différentielle.

$i(t), u(t)$

$\underline{100}$

$\Delta p$

$\underline{102}$

FIG. 1

i(t)

t

# FIG. 2

$\Delta p$

$\Delta pmax$

p0

i1    i2    i

# FIG. 3

FIG. 4

FIG. 5

600

Mb

v

601

Fs

**Fig. 6**

700 → 701 → 702 → 703

**Fig. 7**

**Fig. 8**